# EUROPÄISCHE PATENTSCHRIFT

(11) **EP 3 592 675 B1**
(45) Veröffentlichungstag und Bekanntmachung des Hinweises auf die Patenterteilung: **08.05.2024**
(21) Anmeldenummer: 17786916.1
(22) Anmeldetag: 19.10.2017
(51) Int. Cl.: B65G 47/31, B65G 47/84

(54) **BEHÄLTERBEHANDLUNGSMASCHINE UND TRANSPORTEINRICHTUNG FÜR BEHÄLTER**
CONTAINER TREATMENT MACHINE AND TRANSPORT DEVICE FOR CONTAINERS
MACHINE DE TRAITEMENT DE RÉCIPIENTS ET DISPOSITIF DE TRANSPORT DE RÉCIPIENTS

(30) Priorität: 08.03.2017 DE 102017203831
(43) Veröffentlichungstag der Anmeldung: 15.01.2020
(73) Patentinhaber: Krones AG, 93073 Neutraubling (DE)
(72) Erfinder: GERTLOWSKI, Georg, 93073 Neutraubling (DE); ZEUS, Florian, 93073 Neutraubling (DE); STEIMMER, Juergen, 93073 Neutraubling (DE)
(74) Vertreter: Grünecker Patent- und Rechtsanwälte PartG mbB
(86) Internationale Anmeldenummer: PCT/EP2017/076711
(87) Internationale Veröffentlichungsnummer: WO 2018/162093

(56) Entgegenhaltungen:
- EP-A1- 1 924 513
- EP-A1- 2 650 238
- EP-A2- 2 269 923
- WO-A1-99/03766
- WO-A2-2009/064727
- DE-A1- 1 532 585
- FR-A1- 2 775 270
- JP-A- 2005 212 949

## Beschreibung

Die vorliegende Erfindung betrifft eine Behälterbehandlungsmaschine sowie ein Verfahren zum Behandeln von Behältern und eine Transporteinrichtung zum Transportieren von Behältern.

### Stand der Technik

Behälterbehandlungsmaschinen sowie Transporteinrichtungen sind aus dem Stand der Technik bekannt.

So zeigt beispielsweise die DE 10 2008 020 116 A1 eine Behälterbehandlungsmaschine mit einer ihr zugeordneten Transporteinrichtung für Behälter. In der Transporteinrichtung ist ein Sägezahnstern zum Unterbrechen des Behältertransports vorgesehen. Dabei werden die Behälter mittels eines Transportbands dem Sägezahnstern zugeführt. Der Sägezahnstern wird zum Unterbrechen des Behältertransports nur zeitweise bewegt, wobei aufgrund des Profils der Zähne des Sägezahnsterns die Weiterleitung von Behältern blockiert wird.

Ähnliches zeigt die EP 2 615 046 B1. Hier werden die Behälter entlang einer Führung, die die Behälter unterhalb ihres Tragrings umgreift, transportiert und durch ein Flaschentransferkarussell innerhalb der Führung auf Abstand gebracht.

Die EP 2 266 923 A2 zeigt eine Vorrichtung gemäß dem Oberbegriff des Anspruchs 1 mit einer Einteilschnecke, wobei relativ zur Einteilschnecke zwei antreibbare Transportbänder angeordnet sind. Dabei werden die Transportbänder entlang der Einteilschnecke mit unterschiedlichen Geschwindigkeiten bewegt.

Mit den bekannten Vorrichtungen und Verfahren kann zwar der Abstand der Behälter in einem Transportband verändert werden, jedoch sind die Behälter während des Transports erheblichen Reibungskräften ausgesetzt, sodass es zu Abrieb an den Oberflächen der Behälter kommen kann.

### Aufgabe

Ausgehend vom bekannten Stand der Technik liegt der Erfindung daher die Aufgabe zugrunde, Mittel zum Transport der Behälter bereitzustellen, die einen verminderten Abrieb des Behältermaterials während des Transports gewährleisten.

### Lösung

Diese Aufgabe wird durch die Behälterbehandlungsmaschine zum Behandeln von Behältern nach Anspruch 1 und durch das Verfahren zum Behandeln von Behältern nach Anspruch 4 gelöst. Vorteilhafte Weiterbildungen der Erfindung sind in den Unteransprüchen erfasst.

Die erfindungsgemäße Behälterbehandlungsmaschine zum Behandeln von Behältern ist im Anspruch 1 definiert und umfasst einen Maschineneinlauf mit einem ersten Transportband und einem zweiten Transportband, wobei die Transportbänder in einem Überführungsbereich parallel zueinander verlaufen und im Überführungsbereich eine Führung angeordnet ist, sodass Behälter durch die Führung von dem ersten Transportband auf das zweite Transportband überführt werden, wobei das zweite Transportband zum Transport der Behälter mit einer höheren Transportgeschwindigkeit als das erste Transportband vorgesehen ist, wobei stromab des Überführungsbereichs ein Sägezahnstern im Maschineneinlauf zur Einteilung, insbesondere Vergrößerung des Abstands der Behälter angeordnet ist, wobei die Behälter aus dem Sägezahnstern an eine Behälterbehandlungsstation in der Behälterbehandlungsmaschine übergeben werden können. Durch die vorgesehenen Transportbänder, die sich mit unterschiedlicher Geschwindigkeit bewegen, kann bereits vor Erreichen des Sägezahnsterns der Abstand der Behälter zueinander vergrößert und somit der Abrieb von Behältermaterial während des Transports verringert werden. Auch bei einem Stau der Behälter vor der Übergabe an den Sägezahnstern wirken geringere Kräfte auf die Behälter, da diese durch das zweite Transportband bereits vereinzelt wurden. Die unterschiedlichen Geschwindigkeiten der Transportbänder sind derart einstellbar, dass ein Abstand der Behälter erzeugt werden kann.

Erfindungsgemäß ist stromab des zweiten Transportbands im Bereich des Sägezahnsterns ein Führungsbogen angeordnet, dessen Krümmungsradius größer als der maximale Radius des Sägezahnsterns ist. Durch das Zusammenwirken des Sägezahnsterns mit dem Führungsbogen kann ein zuverlässiger Transport der Behälter gewährleistet werden und gleichzeitig der Abrieb des Behältermaterials reduziert werden.

Erfindungsgemäß ist ein Einlaufbereich vorgesehen, in dem die Behälter in den Sägezahnstern einlaufen können, wobei sich das zweite Transportband in den Einlaufbereich erstreckt und sich stromab ein Gleitbereich für die Behälter im Bereich des Führungsbogens an das zweite Transportband anschließt. Die Behälter werden entlang des Sägezahnsterns somit auf dem Gleitbereich, auch Überschub genannt, transportiert, was den Abrieb insbesondere des Behälterbodens weiter reduzieren kann. Da die Behälter weiterhin nur in Abhängigkeit der Geschwindigkeit des Sägezahnstern bewegt werden und keine zusätzlichen Beschleunigungen auf sie wirken, können auch die auftretenden Reibungskräfte an der Mantelfläche der Behälter reduziert werden.

Es kann ferner vorgesehen sein, dass eine Transportrichtung des zweiten Transportbandes und eine Tangente an den äußeren Umfangskreis des Sägezahnsterns in dem Einlaufbereich einen Winkel zwischen 10° und 40° einschließen. Die Behälter werden demnach unter einem Winkel in die Aufnahmen des Sägezahnstern eingeführt, was die tangential zur Oberfläche des Behälters wirkenden Reibungskräfte reduziert und damit den Abrieb verglichen mit einer tangentialen Zuführung vermindert.

Weiterhin ist erfindungsgemäß stromauf des Sägezahnsterns eine Sperrvorrichtung für Behälter zum Sperren und Freigeben des Maschineneinlaufs angeordnet. Die Behälter können mit der Sperrvorrichtung kontrolliert an den Sägezahnstern übergeben werden.

Gemäß dem erfindungsgemäßen Verfahren zum Behandeln von Behältern wie Flaschen, wie in Anspruch 4 definiert, werden die Behälter entlang eines ersten Transportbandes mit einer ersten Transportgeschwindigkeit transportiert und in einem Überführungsbereich mittels einer Führung an ein, in dem Überführungsbereich parallel zum ersten Transportband verlaufendes zweites Transportband überführt, wobei das zweite Transportband eine zweite Transportgeschwindigkeit hat, die größer als die erste Transportgeschwindigkeit ist, wobei der Abstand der Behälter stromab des Überführungsbereichs durch einen Sägezahnstern eingeteilt wird, beispielsweise vergrößert wird und die Behälter von dem Sägezahnstern an Behälterbehandlungstationen einer Behälterbehandlungsmaschine übergeben werden. Der Abstand der Behälter kann so während des Transports auf den für die Übergabe an die Behälterbehandlungsstationen notwendigen Abstand eingestellt werden, wobei gleichzeitig der Abrieb an den Oberflächen der Behälter reduziert wird.

Erfindungsgemäß werden die Behälter im Bereich des Sägezahnsterns durch einen Führungsbogen geführt, dessen Krümmungsradius größer als der maximale Radius des Sägezahnsterns ist. Beim Führen der Behälter entlang einer gekrümmten Kurve während des Transports durch den Sägezahnstern kann der Abrieb weiter reduziert werden. In einer weiteren Ausführungsform schließt die Transportrichtung der Behälter in einem Einlaufbereich des Sägezahnsterns mit einer Tangente an den äußeren Umfangskreis des Sägezahnsterns im Einlaufbereich einen Winkel zwischen 10° und 40° ein. Die Behälter werden somit nicht tangential, sondern schräg in den Sägezahnstern eingebracht, sodass auf die Behälter einwirkende Reibungskräfte tangential zum Sägezahnstern reduziert werden.

Erfindungsgemäß ist vorgesehen, dass die Zuführung von Behältern zum Sägezahnstern durch eine Sperrvorrichtung gesperrt oder freigegeben wird. Das Einlaufen eines Behälters in eine Tasche des Sägezahnsterns kann durch die Sperrvorrichtung genau geregelt werden.

Die erfindungsgemäße Transporteinrichtung zum Transportieren von Behältern wie Flaschen umfasst wenigstens eine bewegliche und eine unbewegliche Komponente, wobei die bewegliche Komponente eine Bewegung zum Transportieren der Behälter bewirken kann und eine Verschleißfläche der unbeweglichen Komponente Elemente umfasst, deren Reibungskoeffizient bezüglich Glas und/oder PET kleiner ist als der Gleitreibungskoeffizient der Verschleißfläche und/oder der beweglichen Komponente bezüglich Glas und/oder PET. Dabei kann entweder der Gleitreibungskoeffizient oder der Rollreibungskoeffizient (oder beide) der Elemente kleiner sein als der Gleitreibungskoeffizient der Verschleißfläche oder der beweglichen Komponente bezüglich Glas und/oder PET. Durch diese Elemente kann die insgesamt auf die Behälter einwirkende Reibung während des Transports entlang der unbeweglichen Komponenten reduziert und damit der Abrieb verringert werden.

In einer Ausführungsform sind die Elemente in der Verschleißfläche um wenigstens eine Achse drehbar gelagert. Zusätzlich zur Verringerung des Abriebs durch den niedrigeren Reibungskoeffizienten (beispielsweise Gleitreibungskoeffizient) kann die drehbare Lagerung der Elemente die auf die Behälter einwirkenden Reibungskräfte (weiter) reduzieren, was den Abrieb an der unbeweglichen Komponente verringert.

Ferner kann vorgesehen sein, dass die Elemente einen Durchmesser von 0,5 mm bis 6 mm aufweisen und/oder die Elemente aus einem der folgenden Materialien bestehen oder eine äußere Oberfläche aus einem dieser Materialien aufweisen: Kunststoff aus PEEK, Glas oder glasähnliche Materialien, nicht rostende Metalle, Zirkoniumdioxid, Pulvert, Aluminiumoxid und Zirkoniumdioxid, Siliziumnitrid und Zirkoniumdioxid. Ferner kann vorgesehen sein, dass die Härte der Elemente zwischen 1000 und 1800 HV 10 beträgt und/oder die Elemente können als Kugeln, Ellipsoide oder Zylinder ausgebildet sein. Die Elemente können auch nur Segmente dieser Formen, beispielsweise Kugelsegmente, Ellipsoidensegmente oder Zylindersegmente umfassen. Sämtliche diese Varianten reduzieren den Abrieb der Behälter gegenüber den unbeweglichen Komponenten weiter.

Es kann ferner vorgesehen sein, dass die Verschleißfläche einen die Elemente umfassenden Verschleißstreifen umfasst, wobei der Verschleißstreifen wenigstens eines der Materialien PE, PA6 Murt Feld-Material-Grün, Polyethylen umfasst und/oder die molare Masse des Materials, aus dem der Verschleißstreifen besteht, zwischen 3,9 und 10,5 g/mol beträgt. Diese Materialien sind beständig gegenüber Verschleiß und besitzen gleichzeitig einen geringen Reibungskoeffizienten gegenüber Glas bzw. PET, sodass nicht nur der Verschleiß der Behälter, sondern auch der Verschleiß des Verschleißstreifens reduziert werden kann.

In einer Weiterbildung dieser Ausführungsform ist der Verschleißstreifen lösbar mit der Transporteinrichtung verbunden. Falls ein Austausch des Verschleißstreifens aufgrund von Verschleiß oder Beschädigungen erforderlich ist, können die Stillstandszeiten der Maschine niedrig gehalten werden.

In einer weiteren Ausführungsform sind die Elemente in wenigstens zwei Reihen angeordnet, wobei die Reihen parallel zueinander verlaufen und bezüglich einer Transportebene, in der die Behälter transportiert werden, unterschiedliche Abstände aufweisen, wobei die Elemente benachbarter Reihen derart versetzt zueinander angeordnet sind, dass eine Verbindungslinie von nächsten Nachbarn auf verschiedenen Reihen einen Winkel von 15° bis 45° mit einer Verbindungslinie nächster Nachbarn einer Reihe einschließt. Dabei werden die Verbindungslinien zum nächsten Nachbarn benachbarter Reihen jeweils bezüglich desselben ausgezeichneten Punktes des Elements bzw. der Elemente bestimmt. So kann die Verbindungslinie beispielsweise durch die Mittelpunkte der Elemente benachbarter Reihen verlaufen. Ebenso wird die Verbindungslinie nächster Nachbarn einer Reihe bestimmt. Durch das Versetzen der Elemente auf parallelen Reihen kann sichergestellt werden, dass die Behälter während des Transports möglichst kontinuierlich mit den Elementen mit geringerem Reibungskoeffizient in Kontakt sind, sodass der Verschleiß über die gesamte Transportstrecke gering gehalten werden kann.

### Kurze Beschreibung der Figuren

- Figur 1: zeigt eine Behälterbehandlungsmaschine mit einem Maschineneinlauf gemäß einer Ausführungsform,
- Figur 2: zeigt eine vergrößerte schematische Darstellung des Einlaufbereichs des Maschineneinlaufs,
- Figur 3: zeigt eine Ausführungsform des Maschineneinlaufs mit einer Sperrvorrichtung,
- Figur 4: zeigt eine Transporteinrichtung gemäß einer Ausführungsform,
- Figur 5: zeigt einen Querschnitt durch die Transporteinrichtung der Figur 4,
- Figur 6: zeigt eine weitere Ausführungsform der Elemente zur Reduktion des Abriebs,
- Figur 7: zeigt eine Ausführungsform der Verschleißfläche als Verschleißstreifen,
- Figur 8: zeigt eine Draufsicht auf eine Verschleißfläche gemäß einer weiteren Ausführungsform.

### Ausführliche Beschreibung

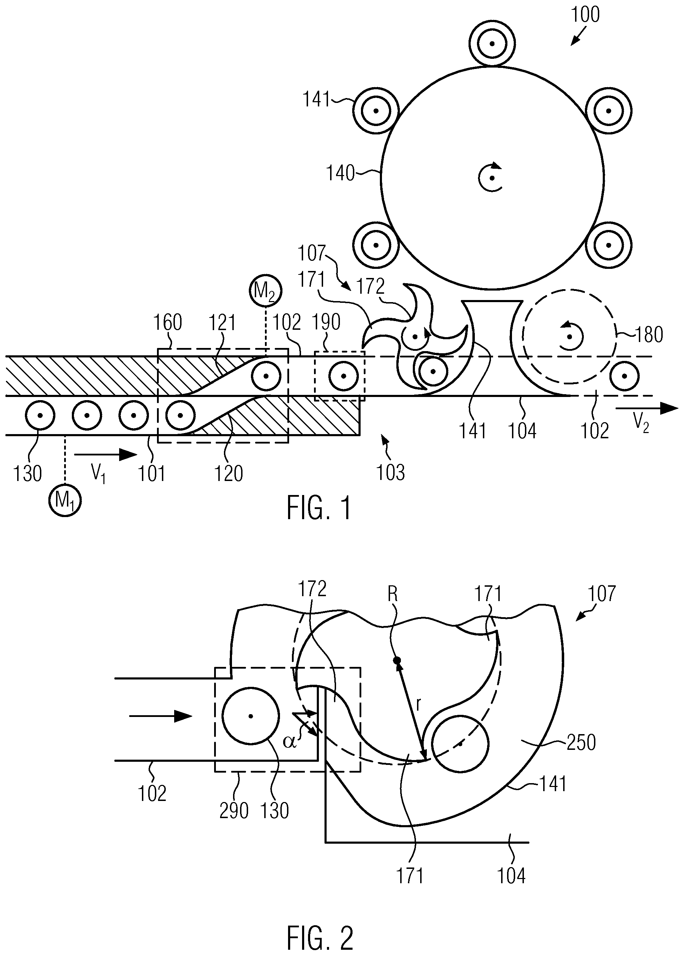

Figur 1 zeigt eine Behälterbehandlungsmaschine 100 gemäß einer Ausführungsform der Erfindung. Bei der Behälterbehandlungsmaschine kann es sich um jede Art von Behälterbehandlungsmaschine handeln, die zur Behandlung vorzugsweise ausgeformter Behälter, wie beispielsweise Flaschen, ausgebildet ist. Dazu zählen beispielsweise Etikettiermaschinen, Füller, Druckmaschinen und ähnliches.

Die Behälterbehandlungsmaschine 100 kann zu diesem Zweck beispielsweise ein Karussell 140 mit mehreren Behälterbehandlungstationen 141 umfassen, in die Behälter aufgenommen und behandelt werden können. Dabei muss die Behandlung der Behälter nicht durch die Behälterbehandlungstationen selbst erfolgen, sondern kann auch durch an der Peripherie des Karussells angeordnete Behandlungseinheiten, wie beispielsweise Etikettieraggregate oder Druckköpfe, erfolgen. Die Ausführungsform der Behälterbehandlungsmaschine als Karussell ist nicht zwingend. Alternativ kann die Behälterbehandlungsmaschine auch einen linearen Bereich umfassen, in dem die Behälter entlang einer Transportstrecke transportiert und durch Behandlungstationen behandelt werden.

In der in Figur 1 dargestellten Ausführungsform umfasst die Behälterbehandlungsmaschine weiterhin einen Maschineneinlauf 103, in dem die Behälter transportiert und letztlich dem dargestellten Karussell 140 zugeführt werden. Nach der Behandlung der Behälter in dem Karussell 140 können die Behälter aus den Behälterbehandlungstationen 141 an eine weitere Transporteinrichtung 180, die hier nur schematisch dargestellt ist, übergeben werden und somit aus der Behälterbehandlungsmaschine abtransportiert werden.

Der Maschineneinlauf 103 umfasst erfindungsgemäß ein erstes Transportband 101, in dem die Behälter 130 mit einer Geschwindigkeit V1 transportiert werden. Dazu wird das Transportband durch einen vorzugsweise regelbaren, insbesondere frequenzgesteuerten Antrieb_M1 angetrieben. Die Geschwindigkeit V1 kann dabei so gewählt sein, dass die Behälter nach Verlassen eines vorherigen Prozesses bzw. einer stromauf angeordneten, vorherigen Behälterbehandlungsmaschine bereits im Transportband 101 beabstandet zueinander transportiert werden. Dazu kann die Geschwindigkeit V1 so gewählt sein, dass sie größer ist als die Transportgeschwindigkeit der Behälter in der vorherigen Behälterbehandlungsmaschine oder vorherigen Transportvorrichtungen. Die Behälter werden vom ersten Transportband 101 auf ein zweites Transportband 102 überführt. Dieses Transportband bewegt sich mit einer Geschwindigkeit bzw. transportiert die Behälter mit einer Geschwindigkeit V2, die größer ist als die Geschwindigkeit V1, sodass sich der Abstand der Behälter im zweiten Transportband 102 verglichen mit dem ersten Transportband 101 vergrößert. Auch dieses Transportband kann durch einen regelbaren, insbesondere frequenzgesteuerten Antrieb M2 angetrieben werden. Bevorzugt ist die Geschwindigkeit des zweiten Transportbandes zwischen 5% und 15% größer als die Geschwindigkeit des ersten Transportbandes. Das zweite Transportband 102 kann dabei so angeordnet sein, dass es sich vom Maschineneinlauf 103 durch eine später beschriebene Führung hindurch in die weitere Transporteinrichtung 180 erstreckt, sodass Behälter mit diesem Transportband auch aus der Behälterbehandlungsmaschine nach der Behandlung abtransportiert werden können.

Im Maschineneinlauf 103 werden die Behälter in einem Überführungsbereich 160 von dem ersten Transportband 101 auf das zweite Transportband 102 überführt. Zu diesem Zweck ist im Überführungsbereich 160 eine Führung angeordnet. Diese Führung kann beispielsweise durch zwei bezüglich der Transportrichtung schräg verlaufende, parallele Führungselemente 120 und 121 erfolgen. Die Transportbänder 101 und 102 verlaufen in dem Überführungsbereich 160 vorzugsweise parallel zueinander, sodass durch den Kontakt eines Behälters mit dem Führungselement 120 bei gleichzeitiger Bewegung des ersten Transportbandes 101 eine Überführung dieses Behälters auf das zweite Transportband 102 erfolgt, in dem der Behälter dann weitertransportiert wird. Durch Kontakt des Behälters 130 mit dem Führungselement 120 wirkt ein Drehmoment auf den Behälter, das durch die Transportgeschwindigkeit V1 im ersten Transportband und die damit verbundene Reibungskraft der Oberfläche des Behälters an dem Führungselement 120 sowie dem Anstellwinkel des Führungselements und dem Radius des Behälters bestimmt wird. Um zum einen die Dauer des Kontakts der Oberfläche des Behälters mit dem Führungselement 120 möglichst kurz zu halten und zum anderen Beschädigungen des Behälters zu reduzieren, beträgt der Anstellwinkel des Führungselements 120 mit Bezug auf die durch das erste Transportband 101 definierte Transportrichtung bevorzugt 45°. Aber auch andere Winkel beispielsweise zwischen 30 und 60° sind denkbar. Durch das Drehmoment rollt der Behälter mit seiner Oberfläche an dem Führungselement in Richtung des zweiten Transportbands 102 ab.

Um zu gewährleisten, dass die Überführung der Behälter 130 vom ersten Transportband auf das zweite Transportband zuverlässig erfolgt, kann das erste Transportband 101 in seiner durch den Pfeil dargestellten Transportrichtung unter dem Führungselement 120 hindurch weiterlaufen. Das zweite Transportband 102 kann weiterhin bereits vor dem Führungselement 121 beginnen, sodass Behälter, die vom ersten Transportband 101 auf das zweite Transportband 102 überführt werden, auch in jedem Fall zuverlässig von diesem Transportband weitertransportiert werden.

Stromab des Überführungsbereichs 160 ist ein Sägezahnstern 107 angeordnet. Dieser Sägezahnstern umfasst mehrere Zähne 171 und Taschen 172. Die in dem zweiten Transportband 102 transportierten Behälter werden von dem Sägezahnstern 107 in den Taschen 172 aufgenommen und gemäß der dargestellten Rotationsrichtung des Sägezahnsterns 107 weitertransportiert, um schließlich an das Karussell 140 bzw. eine der Behälterbehandlungstationen 141 übergeben zu werden. Die Zähne des Sägezahnsterns 107 können dabei vorteilhaft genutzt werden, um ein Abrollen der Behälter in die Taschen 172 zu gewährleisten. So blockieren die Zähne 171 den Einlaufbereich 190 nach der Übernahme eines Behälters für einen nachfolgenden Behälter, bis in Rotationsrichtung die nächste Tasche 172 folgt. Da der Behälter durch das Transportband 102 weiter in Richtung des Sägezahnsterns bewegt wird bzw. ein durch die Geschwindigkeit V2 bedingter Vorschub des Behälters in Richtung des Sägezahnsterns erfolgt, rollt der Behälter an dem sich an ihm vorbeibewegenden Sägezahn ab, bis er in die auf den Sägezahn folgende Tasche 172 gleitet und dann durch den Sägezahnstern 107 weitertransportiert werden kann. Der Sägezahnstern kann mit einer Rotationsgeschwindigkeit betrieben werden, die so gewählt ist, dass die Behälter an die Behandlungsstationen der Behälterbehandlungsmaschine übergeben werden können. Insbesondere kann die Geschwindigkeit, mit der Behälter durch den Sägezahnstern transportiert werden, gleich oder zwischen 5% und 15% größer sein, als die Transportgeschwindigkeit V2 im zweiten Transportband.

Um zu verhindern, dass Behälter aus den Taschen 172 des Sägezahnsterns 107 herausgleiten, kann ein Führungsbogen 104 vorgesehen sein, der beispielsweise als Kreissegment ausgebildet sein kann und so angeordnet ist, dass sich die Sägezähne entlang des Profils 141 des Führungsbogens bewegen. Die Behälter werden so an einer Bewegung aus dem Sägezahnstern 107 heraus zum einen durch die Taschen 172 und zum anderen durch das Profil des Führungsbogens 104 gehindert.

Figur 2 zeigt eine detailliertere bzw. vergrößerte Ansicht des Bereichs des Maschineneinlaufs, der den Sägezahnstern und einen Teil des zweiten Transportbands 102 umfasst. Wie bereits beschrieben, ist im Bereich des Sägezahnsterns 107 ein Einlaufbereich 290 vorgesehen, in dem die Behälter aus dem zweiten Transportband 102 an den Sägezahnstern übergeben werden. Zu diesem Zweck erstreckt sich das zweite Transportband 102 wenigstens teilweise unterhalb des Sägezahnsterns in den Bereich des Sägezahnsterns hinein. Das bedeutet, dass die Zähne 171 des Sägezahnsterns bei Drehung um die Rotationsachse R zumindest teilweise über das zweite Transportband 102 hinweg laufen. Dies gewährleistet, dass die Behälter durch das zweite Transportband 102 in Richtung des Sägezahnsterns bewegt werden und an den Sägezähnen 171 bzw. deren äußeren Profil abrollen, bis sie letztlich in eine der Taschen 172 hinein gleiten.

Wie bereits beschrieben, kann sich das zweite Transportband auch durch den Führungsbogen hindurch (unterhalb des Führungsbogens) erstrecken und im Maschinenauslauf als Transportband zum Abtransportieren der Behälter aus der Behälterbehandlungsmaschine (Transporteinrichtung 180) dienen.

Da die Bewegung der Behälter 130 ab ihrer Übergabe in die Tasche 172 durch die Drehung des Sägezahnsterns 107 bestimmt wird, kann anstelle des Transportbands 102 dann eine Gleitfläche bzw. ein Überschub 250 vorgesehen sein, auf der der Behälterboden des Behälters 130 entlang gleiten kann. Die Gleitfläche besteht dabei aus einem Material, das einen möglichst geringen Reibungskoeffizient (Gleitreibungskoeffizient oder Haftreibungskoeffizient) gegenüber Glas und/oder PET besitzt. Dabei kann es sich beispielsweise ebenfalls um eine Glasoberfläche oder um eine polierte metallische Oberfläche oder andere Materialien handeln. Abrieb des Behälterbodens an der Gleitfläche kann so vermieden werden.

Bevorzugt erfolgt der Einlauf der Behälter 130 in den Bereich des Sägezahnsterns derart, dass die Transportrichtung der Behälter 130 mit einer Tangente an den hier gestrichelt dargestellten Umfangskreis des Sägezahnsterns mit maximalem Umfang einen Winkel von 10° bis 40° einschließt. Die Behälter laufen also nicht tangential an den Zähnen 171 des Sägezahnsterns 107 entlang, sondern treffen die Sägezähne bzw. deren äußere Oberfläche unter dem angegebenen Winkel. Dies führt dazu, dass sie ein Drehmoment erfahren, das durch den Winkel zwischen Transportrichtung und Tangente die Rotationsgeschwindigkeit des Sägezahnsterns 107 und die Transportgeschwindigkeit im Transportband sowie den Radius des Behälters bestimmt wird. Durch dieses Drehmoment rollen die Behälter an dem sich an ihnen vorbeibewegenden Sägezahn 171 ab, bis sie letztlich in eine der Taschen 172 gleiten.

In einer Ausführungsform schließt sich der Führungsbogen 104 im Einlaufbereich 290 unmittelbar an das zweite Transportband 102 an. Selbiges gilt für die Gleitfläche 250. Dabei taucht das zweite Transportband 102 nach der Übergabe des Behälters 130 an eine der Taschen 172 ab und die Gleitfläche 250 schließt sich daran bevorzugt mit einer Lücke von maximal 5 mm, bevorzugt 2mm Breite an. So wird zum einen gewährleistet, dass das Transportband zuverlässig abtauchen kann und zum anderen kann verhindert werden, dass es aufgrund einer zu großen Lücke zu Beschädigungen der üblicherweise mit hohen Geschwindigkeiten transportierten Behälter kommt. Die Lücke kann auch kleiner gewählt werden. Ferner ist der Abstand der Gleitfläche 250 zu der durch das Transportband 102 definierten Transportebene senkrecht zu dieser Transportebene möglichst klein, bevorzugt 0. Ein Umkippen der Behälter kann so verhindert werden. In jedem Fall ist bevorzugt, dass die Gleitfläche höchstens niedriger als die Transportebene ist, um ein Anstoßen der Behälter 130 an die Gleitfläche zu verhindern.

Der Führungsbogen, bzw. der Übergang des Bogens zum zweiten Transportband kann mit der durch das zweite Transportband definierten Transportrichtung der Behälter einen Winkel einschließen. Dieser kann analog zum Winkel zwischen Transportrichtung und Tangente an dem Umfangskreis des Sägezahnsterns 107 zwischen 10° und 40° betragen.

Der Führungsbogen 104 bzw. dessen Profil 141 kann so gewählt sein, dass der Krümmungsradius wenigstens gleich dem maximalen Radius des Sägezahnsterns 107 ist. Bevorzugt ist der Krümmungsradius des Führungsbogens jedoch größer als der Radius r des Sägezahnsterns. So wird Kontakt der Sägezähne des Sägezahnsterns 107 mit dem Führungsbogen verhindert, was Verschleiß dieser Komponenten reduzieren kann. Der maximale Radius r entspricht dabei dem von der Rotationsachse R am weitesten entfernten Element des Sägezahnsterns 107. Dabei kann es sich beispielsweise um einen Teil des Profils der Sägezähne 171 handeln. Der Führungsbogen 104 bzw. sein Profil 141 und der Sägezahnstern sind bevorzugt bezüglich der Rotationsachse R konzentrisch angeordnet.

Weiterhin kann, da die Bewegung der Behälter im Wesentlichen durch den Sägezahnstern definiert wird, vorgesehen sein, dass die Kontaktfläche des Führungsbogens 104, die mit den Behältern 130 gegebenenfalls in Kontakt kommt, einen möglichst geringen Reibungskoeffizient, hier im besonderen der Rollreibungskoeffizient, gegenüber Glas und/oder PET aufweist, so dass der Abrieb der Behälteroberfläche selbst bei Kontakt mit dem Führungsbogen 104 möglichst klein ist.

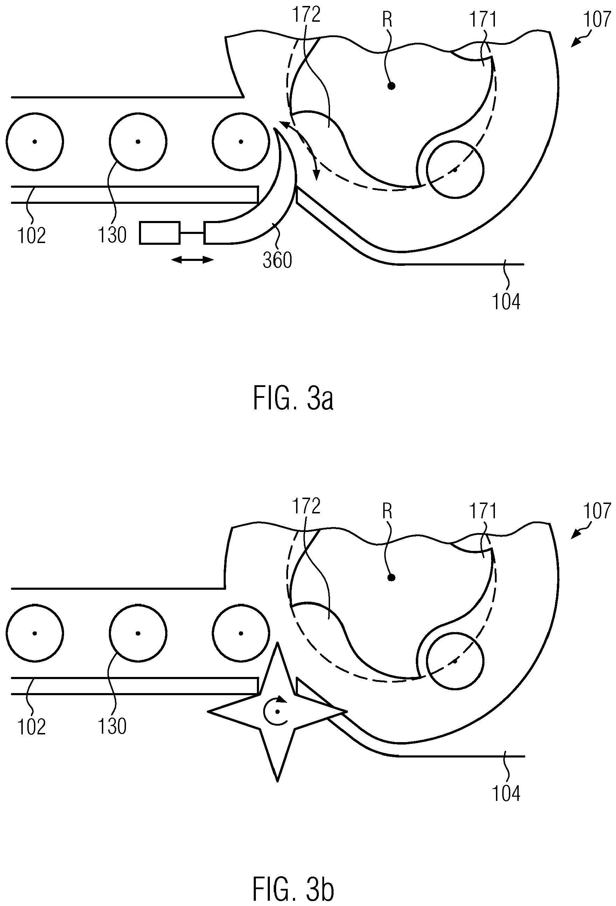

Figur 3a und 3b zeigen weitere Ausführungsformen des Maschineneinlaufs. Analog zur Figur 2 ist hier im Wesentlichen der Bereich des Maschineneinlaufs dargestellt, der den Sägezahnstern 107, den Führungsbogen 104 und zumindest einen Teil des zweiten Transportbands 102 umfasst.

In Fig. 3a ist stromauf des Sägezahnsterns in dieser Ausführungsform im Bereich des zweiten Transportbands 102 eine bewegliche Sperrvorrichtung 360 angeordnet. Diese Sperrvorrichtung ist als Sperrklinke derart ausgebildet, dass sie zumindest teilweise in die Transportebene des zweiten Transportbands 102 derart hinein bewegt werden kann, dass eine weitere Bewegung der darin transportierten Behälter 130 in Richtung des Sägezahnsterns 107 unterbunden wird. Diese Bewegung kann periodisch und insbesondere gekoppelt mit der Bewegung des Sägezahnsterns durch den Antrieb 361 bewirkt werden, sodass, nachdem ein erster Behälter in eine Tasche des Sägezahnsterns geführt wurde, ein nachfolgender Behälter durch Sperrung des Einlaufbereichs durch die Sperrklinke gemäß Fig. 3a zunächst an einer Bewegung in Richtung des Sägezahnsterns gehindert wird und höchstens an der äußeren Oberfläche eines Sägezahns abrollt. Rückt eine Tasche des Sägezahnsterns vor, sodass ein Behälter übergeben werden kann, gibt die Sperrklinke den Einlaufbereich frei und der Behälter kann in die Tasche des Sägezahnsterns bewegt und von dieser abtransportiert werden.

In Fig. 3b ist eine weitere Ausführungsform der Sperrvorrichtung 360 dargestellt. In dieser Ausführungsform ist die Sperrvorrichtung als Sperrstern ausgebildet, der entgegen der Rotationsrichtung des Sägezahnsterns rotiert und den Einlaufbereich abwechselnd freigibt und sperrt. Die Rotation des Sägezahnsterns und des Sperrsterns können miteinander gekoppelt sein, sodass ein geregeltes Freigeben und Sperren des Einlaufbereichs auch bei sich verändernder Rotationsgeschwindigkeit des Sägezahnsterns erfolgen kann.

Die Sperrvorrichtung kann zusätzlich zum Sperren und Freigeben des Einlaufs während des Betriebs auch vorteilhaft genutzt werden, um die Behälterbehandlungsmaschine leer zu fahren. Dazu kann die Sperrvorrichtung den Einlauf permanent sperren, sodass keine Behälter mehr in die Behälterbehandlungsmaschine transportiert werden und sämtliche noch in der Behälterbehandlungsmaschine befindlichen Behälter können behandelt und aus dieser abtransportiert werden.

Die obigen Ausführungsformen erlauben eine Reduktion des Abriebs der Behälter insbesondere durch Reduktion des Kontakts der Behälter mit beispielsweise den Führungselementen 120 und 121 sowie mit den Sägezähnen 171 des Sägezahnsterns. Dies wird insbesondere durch die Wahl der entsprechenden Kontaktwinkel der Oberfläche der Behälter mit den Sägezähnen bzw. Führungselementen erreicht. Auch der Transport der Behälter im zweiten Transportband mit einer Transportgeschwindigkeit, die größer ist als die Transportgeschwindigkeit im ersten Transportband reduziert die Reibungskräfte der Behälter untereinander, da sie mit größerem Abstand zueinander transportiert werden und somit ein Druck nachfolgender Behälter bei gegebenenfalls auftretendem Behälterstau reduziert werden kann.

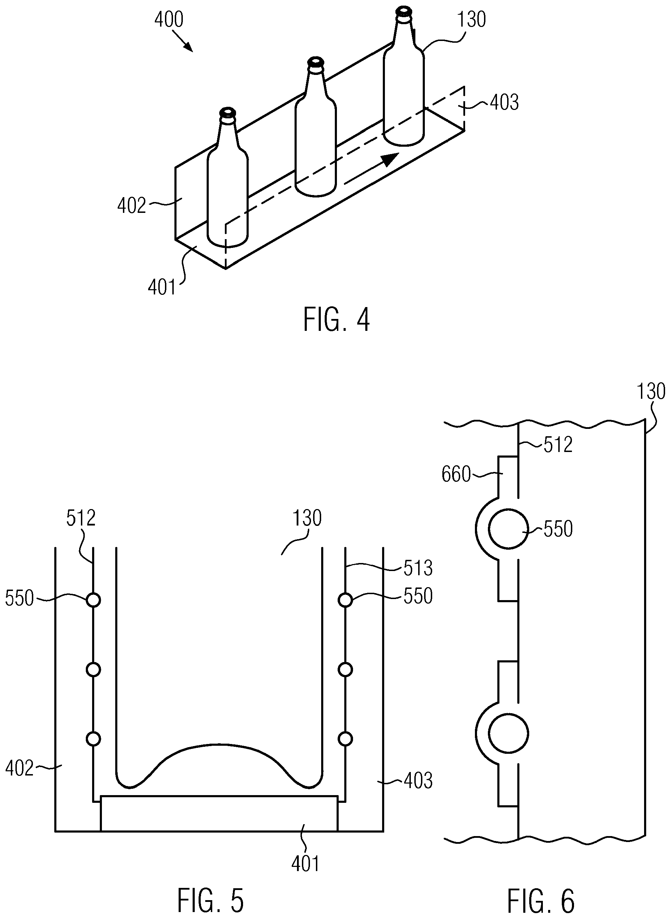

Alternativ oder zusätzlich dazu können auch dem Fachmann bekannte Mittel zur Reduktion des Abriebs der Oberfläche der Behälter genutzt werden, wie beispielsweise Gleitelemente in Form von Kugeln, etc. Ebenso zählen dazu die im Folgenden beschriebenen Varianten der Figuren 4 bis 8, die somit sämtlich mit den Ausführungsformen und Beispielen der Figuren 1 bis 3 kombiniert werden können.

Hierzu zeigt Figur 4 eine mögliche Ausführungsform. In Figur 4 ist eine allgemeine Transporteinrichtung 400 für Behälter dargestellt. Zwar ist hier ein Transportband 401 mit seitlichen Führungselementen 402 und 403 dargestellt, jedoch sind auch andere Ausführungsformen denkbar. So kann die gemäß den folgenden Figuren beschriebene Ausführungsform zur Reduktion des Abriebs der Oberfläche der Behälter beispielsweise auch mit dem in den Figuren 1 bis 3 beschriebenen Sägezahnstern oder der Kulisse aber auch der Gleitfläche 250 gemäß Figur 2 vorteilhaft genutzt werden. Grundsätzlich handelt es sich in den folgenden Ausführungsformen um eine Transporteinrichtung, die zum einen wenigstens eine bewegliche Komponente (in Fig. 4 das Transportband 401) und wenigstens eine unbewegliche Komponente (in Fig. 4 die Führungselemente 402 und 403) umfasst. Während also im folgenden Bezug auf das Transportband und die Führungselemente genommen wird, können auch sämtliche anderen beweglichen oder unbeweglichen Komponenten von Transporteinrichtungen darunter verstanden werden.

Es ist vorgesehen, dass die bewegliche Komponente ausgebildet ist, eine Bewegung der Behälter 130 zu bewirken. Dies ist bei dem Transportband 401 unmittelbar ersichtlich. Auch durch den Sägezahnstern 107 gemäß den obigen Ausführungen wird eine Bewegung des Behälters bewirkt.

Die unbewegliche Komponente (beispielsweise die Führungselemente 402 und 403) begrenzt üblicherweise die Freiheitsgrade der Bewegung der Behälter. Durch die Führungselemente 402 und 403 wird beispielsweise die Bewegung der Behälter 130 quer zur Transportrichtung im Transportband 401 beschränkt. Dabei bedeutet dies nicht, dass eine Bewegung der Behälter 130 quer zur Transportrichtung vollständig unterbunden wird, jedoch ist sie beispielsweise auf wenige Millimeter beschränkt. Um dies zu erreichen, muss bei einer Bewegung der Behälter quer zur Transportrichtung 401 ein Kontakt der Oberfläche der Behälter mit den Führungselementen 402 und 403 erfolgen. Bei diesem Kontakt entstehen jedoch aufgrund der hohen Transportgeschwindigkeiten der Behälter in dem Transportband 401 Reibungskräfte an der Behälteroberfläche, die sowohl zu einem Abrieb der Behälteroberfläche als auch zu einem Verschleiß der Führungselemente 402 und 403 führen können.

Um diesen Abrieb bzw. Verschleiß zu reduzieren, sind in den Führungselementen 402 und 403 Elemente zur Reduktion der Reibungskräfte vorgesehen. Diese Elemente sind an einer Verschleißfläche der unbeweglichen Komponente, die letztlich gegebenenfalls mit den Behältern 130 in Kontakt kommt, vorgesehen.

Um dies zu veranschaulichen, zeigt Figur 5 einen Querschnitt durch die in Figur 4 dargestellte Transporteinrichtung senkrecht zur Transportrichtung. Die Verschleißflächen sind dabei ersichtlich die Flächen, deren Flächennormale in Richtung der Behälteroberfläche weist. Dies sind die Flächen 512 und 513.

In diese Flächen sind mehrere Elemente 550 eingearbeitet. Diese Elemente treten anstelle der gesamten Flächen 512 und 513 zunächst in Kontakt mit der Oberfläche des Behälters 130, sofern sich dieser quer zur Transportrichtung bewegt. So wird die Größe der Kontaktfläche reduziert, was einen Abrieb eines großflächigen Bereichs der Behälteroberfläche vermeiden kann.

Weiterhin ist es bevorzugt, wenn die Elemente 550 einen Reibungskoeffizient bezüglich Glas und/oder PET aufweisen, der kleiner ist als der Gleitreibungskoeffizient der Verschleißflächen 512 und 513 und/oder des Transportbands 401 (bzw. allgemeiner der beweglichen Komponente) bezüglich Glas und/oder PET. Dabei kann es sich bei dem Reibungskoeffizienten sowohl um den Gleitreibungskoeffizienten als auch den Rollreibungskoeffizienten handeln. Es können auch beide kleiner sein als die Gleitreibungskoeffizienten der Verschleißflächen oder des Transportbandes. Damit wird zum einen das auf die Behälter 130 wirkende Drehmoment, das durch den Kontakt mit den Elementen 550 und die Transportgeschwindigkeit im Transportband 401 sowie den Radius der Behälter 130 bestimmt ist, reduziert, sodass eine Drehung der Behälter vermieden werden kann. Das reduziert die Gefahr eines Umkippens der Behälter in dem Transportband 401. Gleichzeitig wird dadurch die an der Oberfläche der Behälter 130 wirkende Reibungskraft reduziert, was weiterhin den Abrieb verringern kann. Dies gilt nicht nur für die mit den Elementen 550 in Kontakt tretenden Flächen des Behälters, sondern auch für den Boden des Behälters. Da die auftretenden Drehmomente geringer sind, erfolgt eine Drehung des Behälters 130 relativ zum Transportband 401 mit geringerer Geschwindigkeit, sodass der Abrieb des Bodens am Transportband 401 reduziert wird.

Die Elemente können dabei vielfältig ausgebildet sein. Es kann sich um Kugeln, Ellipsoide oder Zylinder handeln. Grundsätzlich sind sämtliche Formen der Elemente denkbar, die keine oder nur wenige Kanten aufweisen. Kugeln sind daher eine bevorzugte Ausführungsform. Die Elemente können grundsätzlich aus verschiedenen Materialien bestehen. So kann beispielsweise Kunststoff aus PEEK verwendet werden. Aber auch Glas oder glasähnliche Materialien sind insbesondere bei einem Transport von Glasbehältern in der Transporteinrichtung bevorzugt. Ebenso können nicht rostende Metalle, aber auch zu Zirkoniumdioxidverbindungen, beispielsweise auch umfassend Aluminiumoxid oder Siliziumnitrid, verwendet werden. Ferner können nicht rostende Metalle, beispielsweise Edelstahl oder auch Pulvert zum Einsatz kommen. Auch Kombinationen dieser Materialien sind denkbar. So kann ein Teil der Elemente aus einem Material und ein anderer Teil der Elemente aus einem anderen Material geformt sein. Grundsätzlich müssen die Elemente nicht vollständig aus den obigen Materialien bestehen, sondern sollten zumindest eine äußere Oberfläche aus diesen Materialien aufweisen.

Da der entstehende Abrieb an der Oberfläche der Behälter und der Verschleiß der Elemente weiter reduziert werden kann, wenn die Elemente möglichst hart sind, ist es bevorzugt, wenn die Härte der Elemente zwischen 1000 und 1800 HV 10 beträgt.

Figur 6 zeigt eine weitere vorteilhafte Ausführungsform, bei der nur ein Ausschnitt einer der Verschleißflächen der Figur 5 dargestellt ist. In dieser Ausführungsform sind die Elemente 550 in der Verschleißfläche 512 drehbar in einem Lager 660 gelagert. Tritt ein Behälter 130 mit den Elementen 550 in Kontakt, so wirkt auf diese ein Drehmoment, das abhängig von der Transportgeschwindigkeit der Behälter, dem Reibungskoeffizienten, der sich durch das Material des Elements 550 und das Material des Behälters 130 bestimmt, dem Reibungskoeffizienten des Elements 550 im Lager 660, sowie dem Radius des Elements ist. In jedem Fall reduziert sich durch die drehbare Lagerung der Elemente 550 die letztlich auf den Behälter 130 einwirkende Reibungskraft um einen Betrag, der dem auf das Element 550 übertragenen Drehmoment entspricht, sodass der Abrieb an der Oberfläche des Behälters weiter reduziert werden kann.

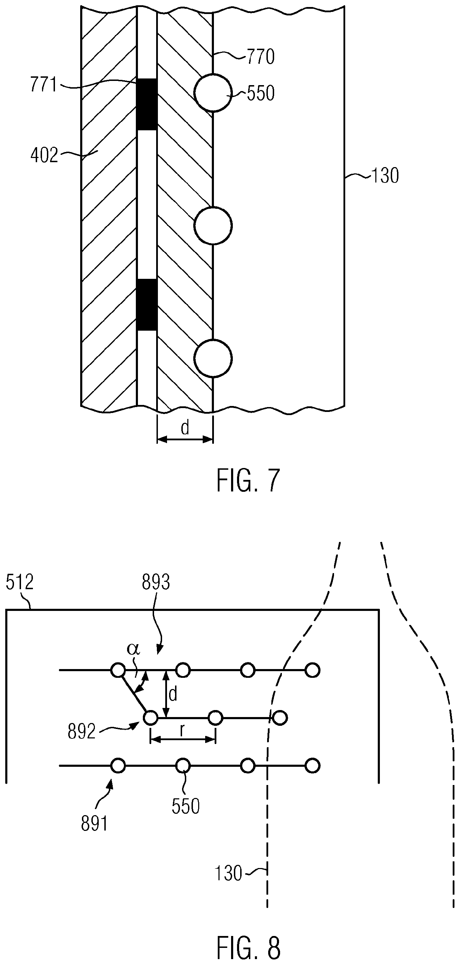

In Figur 7 ist eine weitere Ausführungsform der Verschleißfläche, wie sie beispielsweise in der Figur 5 dargestellt ist, gezeigt. In dieser Ausführungsform ist die Verschleißfläche als Verschleißstreifen 770 dargestellt. Dieser Verschleißstreifen kann eine Dicke von mehreren Millimetern aufweisen, sollte in jedem Fall jedoch so breit sein, dass die Elemente 550 in ihm aufgenommen werden können. Beispielsweise kann der Verschleißstreifen 770 eine Dicke dvon 1 cm aufweisen. Der Verschleißstreifen ist mit der unbeweglichen Komponente 402 in dieser Ausführungsform durch Verbindungselemente 771 verbunden, sodass er bevorzugt lösbar mit der unbeweglichen Komponente 402 verbunden ist und abhängig vom Verschleiß beispielsweise der Elemente 550 oder auch der Kontaktfläche des Verschleißstreifens mit dem Behälter ausgewechselt werden kann. Hier sind insbesondere schnellwechselbare Verbindungen, beispielsweise Klickverbindungen vorteilhaft.

Der Verschleißstreifen kann dabei unterschiedliche Materialien umfassen, beispielsweise PE, PA6 Murt Feld-Material-Grün, Polyethylen. Da die Beständigkeit des Verschleißstreifens 770 gegenüber Verschleiß maßgeblich von der molaren Masse der Materialien, aus denen er besteht, abhängt, können Materialien gewählt werden, deren molare Masse zwischen 3,9 und 10,5 g/mol beträgt. Ferner ist bevorzugt, wenn die in Richtung der Oberfläche des Behälters 130 weisende Fläche des Verschleißstreifens möglichst glatt ist, um Reibungskräfte weiter zu reduzieren. Die Ausführungsform gemäß Figur 7 kann mit der drehbaren Lagerung der Elemente 550 gemäß Figur 6 kombiniert werden.

Figur 8 zeigt eine weitere Ausführungsform der Verschleißfläche 512 in einer Seitenansicht. Die Seitenansicht erfolgt dabei quer zur Transportrichtung der Behälter gemäß Figur 4, sodass die Ansicht durch den gestrichelt dargestellten Behälter 130 hindurch erfolgt. In dieser Ausführungsform sind mehrere, parallel zueinander verlaufende, sich in der Transportrichtung der Behälter erstreckende Reihen 891, 892 und 893 von Elementen 550 dargestellt. Die Reihen sind zueinander durch einen Abstand d beabstandet. Dieser Abstand kann abhängig von der Größe der Elemente einige Millimeter, aber auch mehrere Zentimeter betragen. Ferner weisen nächste Nachbarn in einer Reihe, beispielsweise in der Reihe 892, einen Abstand r zueinander auf. Dieser Abstand kann beispielsweise der Abstand sein, den die Mittelpunkte der Elemente 550 in der Reihe 892 zueinander haben.

Bevorzugt ist es, wenn die Elemente 550 in den einzelnen Reihen versetzt zueinander angeordnet sind. Dies bedeutet, dass der Abstand L nächster Nachbarn zweier Reihen zueinander in jedem Fall größer ist als der Abstand d der einzelnen Reihen zueinander. Dieser Abstand L ist abhängig von dem Winkel α, den eine gedachte Verbindungslinie nächster Nachbarn einer Reihe mit der Verbindungslinie zweier nächster Nachbarn unterschiedlicher Reihen einschließt. Bevorzugt beträgt dieser Winkel zwischen 15° und 45°. Besonders bevorzugt beträgt er 30°. Durch die Wahl eines entsprechenden Winkels und der Anzahl der parallel zueinander verlaufenden Reihen von Elementen 550 kann sichergestellt werden, dass die Behälter in der Transporteinrichtung möglichst stets in Kontakt mit einem der Elemente sind, sofern sie die unbewegliche Komponente berühren. Die Reibungskräfte können somit möglichst gering gehalten werden, ohne dass die gesamte Verschleißfläche aus dem Material der Elemente besteht. Dies reduziert die Kosten für die Verschleißflächen.

Während die obigen Ausführungsformen der Figuren 4 bis 8 mit Hinblick auf eine bewegliche Komponente und eine unbewegliche Komponente beschrieben wurden, wobei die unbewegliche Komponente die Elemente zur Reduzierung des Abriebs umfasst, kann auch vorgesehen sein, dass bewegliche Komponenten einer Transporteinrichtung entsprechende Elemente umfassen. Dies ist besonders dann von Vorteil, wenn eine bewegliche Komponente zwar grundsätzlich eine Bewegung des Behälters bewirkt, damit jedoch eine Veränderung der ursprünglichen Bewegung des Behälters bewirkt wird.

Dies soll am Beispiel der Figur 1 erläutert werden. In dem Einlaufbereich, in dem die Behälter von dem zweiten Transportband an den Sägezahnstern übergeben werden, ist sowohl das Transportband als auch der Sägezahnstern eine bewegliche Komponente. Jedoch bewirkt der Sägezahnsternstern, insbesondere die Sägezähne, eine Rotation der Behälter, sodass diese an den Sägezähnen abrollen und letztlich in die Taschen des Sägezahnsterns gleiten. Während dieses Abrollens entstehen Reibungskräfte zwischen der äußeren Fläche des Sägezahns des Sägezahnsterns und dem daran abrollenden Behälter. Um diese Reibungskräfte vorteilhaft zu reduzieren, kann die mit den Behältern in Kontakt tretende Fläche des Sägezahns Elemente zur Reduzierung des Abriebs gemäß den Figuren 5 bis 8 umfassen. Die Erfindung ist damit nicht darauf beschränkt, dass die Elemente zur Reduktion des Abriebs 550 an grundsätzlich unbeweglichen Komponenten vorgesehen sind. Vielmehr können sie an allen Komponenten einer Transporteinrichtung vorgesehen sein, die eine Änderung des Bewegungszustandes bewirken oder die sich bezogen auf ein mit dem Behälter mit bewegtes Bezugssystem bewegen. Dazu zählen beispielsweise auch entsprechende Sägezahnsterne oder andere Mittel zum Transport der Behälter.

## Patentansprüche

1. Behälterbehandlungsmaschine (100) zum Behandeln von Behältern (130)wie Flaschen, mit einem Maschineneinlauf (103) umfassend ein erstes Transportband (101) und ein zweites Transportband (102), wobei die Transportbänder in einem Überführungsbereich (160) parallel zueinander verlaufen und im Überführungsbereich eine Führung (120, 121) angeordnet ist, sodass Behälter durch die Führung von dem ersten Transportband auf das zweite Transportband überführt werden, wobei das zweite Transportband zum Transport der Behälter mit einer höheren Transportgeschwindigkeit als das erste Transportband vorgesehen ist, wobei stromab des Überführungsbereichs ein Sägezahnstern (107) im Maschineneinlauf zur Einteilung des Abstands der Behälter angeordnet ist, wobei die Behälter aus dem Sägezahnstern an Behälterbehandlungsstationen (141) der Behälterbehandlungsmaschine (100) übergeben werden können, wobei stromab des zweiten Transportbands (102) im Bereich des Sägezahnsterns (107) ein Führungsbogen (104) angeordnet ist, dessen Krümmungsradius wenigstens gleich, bevorzugt größer als der maximale Radius des Sägezahnsterns ist, wobei ein Einlaufbereich (290) vorgesehen ist, in dem die Behälter in den Sägezahnstern (107) einlaufen können und wobei sich das zweite Transportband (102) in den Einlaufbereich erstreckt,
**dadurch gekennzeichnet, dass** stromab sich ein Gleitbereich (250) für
die Behälter im Bereich des Führungsbogens (104) an das zweite Transportband (102) anschließt, wobei stromauf des Sägezahnsterns (107) eine Sperrvorrichtung (360) für Behälter (130) zum Sperren und Freigeben des Einlaufbereichs (290) angeordnet ist.

2. Behälterbehandlungsmaschine (100) nach Anspruch 1, wobei eine Transportrichtung des zweiten Transportbandes (102) und eine Tangente an den äußeren Umfangskreis des Sägezahnsterns (107) in dem Einlaufbereich (290) einen Winkel zwischen 10° und 40° einschließen.

3. Behälterbehandlungsmaschine (100) nach Anspruch 1, wobei die unterschiedlichen Geschwindigkeiten der Transportbänder (101, 102) einstellbar sind und/oder durch einen regelbaren, insbesondere frequenzgesteuerten Antrieb (M1, M2) angetrieben werden.

4. Verfahren zum Behandeln von Behältern (130) wie Flaschen, wobei die Behälter entlang eines ersten Transportbandes (101) mit einer ersten Transportgeschwindigkeit transportiert werden und in einem Überführungsbereich (160) mittels einer Führung (120, 121) an ein, in dem Überführungsbereich parallel zum ersten Transportband (101) verlaufendes, zweites Transportband (102) überführt werden, wobei das zweite Transportband eine zweite Transportgeschwindigkeit hat, die größer als die erste Transportgeschwindigkeit ist, wobei der Abstand der Behälter stromab des Überführungsbereichs durch einen Sägezahnstern (107) eingeteilt wird und die Behälter von dem Sägezahnstern an Behälterbehandlungsstationen (141) einer Behälterbehandlungsmaschine (100) übergeben werden, wobei die Behälter im Bereich des Sägezahnsterns (107) durch einen Führungsbogen (104) geführt werden, dessen Krümmungsradius wenigstens gleich dem maximalen Radius des Sägezahnsterns ist, wobei ein Einlaufbereich (290) vorgesehen ist, in dem die Behälter in den Sägezahnstern (107) einlaufen und wobei sich das zweite Transportband (102) in den Einlaufbereich erstreckt,
**dadurch gekennzeichnet, dass** stromab sich ein Gleitbereich (250) für die Behälter im Bereich des Führungsbogens (104) an das zweite Transportband (102) anschließt, wobei die Zuführung von Behältern zum Sägezahnstern (107) durch eine Sperrvorrichtung (360) gesperrt oder freigegeben wird.

5. Verfahren nach Anspruch 4, wobei die Transportrichtung der Behälter in einem Einlaufbereich (290) des Sägezahnsterns (107) mit einer Tangente an den äußeren Umfangskreis des Sägezahnsterns im Einlaufbereich einen Winkel zwischen 10° und 40° einschließt.

6. Verfahren nach einem der Ansprüche 4 bis 5, wobei die Geschwindigkeit des zweiten Transportbandes (102) zwischen 5% und 15% größer als die Geschwindigkeit des ersten Transportbandes (101) ist.

## Claims

1. Container treatment machine (100) for treating containers (130) such as bottles, with a machine inlet (103) comprising a first conveyor belt (101) and a second conveyor belt (102), wherein the conveyor belts run parallel to each other in a transfer region (160) and a guide (120, 121) is arranged in the transfer region, such that containers are transferred by means of the guide from the first conveyor belt to the second conveyor belt, wherein the second conveyor belt is provided for conveying the containers with a higher conveying speed than the first conveyor belt, wherein downstream of the transfer region a sawtooth star (107) is arranged in the machine inlet for setting the spacing between the containers, wherein the containers can be transferred from the sawtooth star to container treatment stations (141) of the container treatment machine (100), wherein downstream of the second conveyor belt (102) in the region of the sawtooth star (107) a guide arch (104) is arranged, whose radius of curvature is at least equal, preferably larger than the maximum radius of the sawtooth star, wherein an inlet region (290) is provided, in which the containers can enter the sawtooth star (107) and wherein the second conveyor belt (102) extends in the inlet region, **characterized in that** downstream a sliding region (250) for the containers adjoins the second conveyor belt (102) in the region of the guide arch (104), wherein upstream of the sawtooth star (107) a blocking device (360) for containers (130) for blocking and unblocking the inlet region (290) is arranged.

2. Container treatment machine (100) according to claim 1, wherein a conveying direction of the second conveyor belt (102) and a tangent to the outer perimeter circle of the sawtooth star (107) in the inlet region (290) enclose an angle between 10° and 40°.

3. Container treatment machine (100) according to claim 1, wherein the different velocities of the conveyor belts (101, 102) are adjustable and/or driven through a controllable, in particular frequency controlled drive (M1, M2).

4. Method for treating containers (130) such as bottles, wherein the containers are conveyed along a first conveyor belt (101) with a first conveying speed and are transferred in a transfer region (160) by means of a guide (120, 121) to a second conveyor belt (102), which runs parallel to the first conveyor belt (101) in the transfer region, wherein the second conveyor belt has a second conveying speed, which is larger than the first conveying speed, wherein the spacing between the containers downstream the transfer region is set by a sawtooth star (107) and the containers are transferred from the sawtooth star to container treatment stations (141) of a container treatment machine (100), wherein the containers in the region of the sawtooth star (107) are guided through a guide arch (104), whose radius of curvature is at least equal to the maximum radius of the sawtooth star, wherein an inlet region (290) is provided, in which the containers enter the sawtooth star (107) and wherein the second conveyor belt (102) extends in the inlet region, **characterized in that** downstream a sliding region (250) for the containers adjoins the second conveyor belt (102) in the region of the guide arch (104), wherein the supply of containers to the sawtooth star (107) is blocked or unblocked by a blocking device (360).

5. Method according to claim 4, wherein the conveying direction of the containers in an inlet region (290) of the sawtooth star (107) encloses with a tangent to the outer perimeter circle of the sawtooth star in the inlet region an angle between 10° and 40°.

6. Method according to any of claims 4 to 5, wherein the velocity of the second conveyor belt (102) is between 5% and 15% larger than the velocity of the first conveyor belt (101).

## Revendications

1. Machine de traitement de récipients (100) permettant de traiter des récipients (130) tels que des bouteilles, avec une entrée de machine (103) comprenant une première bande transporteuse (101) et une seconde bande transporteuse (102), dans laquelle les bandes de transport s'étendent parallèlement les unes aux autres au sein d'une région de transfert (160) et un guidage (120, 121) est agencé dans la région de transfert de sorte que les récipients sont transférés depuis la première bande transporteuse jusque sur la seconde bande transporteuse grâce au guidage, dans laquelle la seconde bande transporteuse est conçue pour transporter les récipients à une vitesse de transport plus élevée que celle de la première bande transporteuse, dans laquelle une étoile à dents de scie (107) est agencée dans l'entrée de machine en aval de la région de transfert afin d'induire l'espacement des récipients, dans laquelle les récipients peuvent être transférés depuis l'étoile à dents de scie jusqu'à des stations de traitement de récipients (141) de la machine de traitement de récipients (100), dans laquelle un arc de guidage (104), dont le rayon de courbure est au moins égal, de manière préférée supérieur, au rayon maximal de l'étoile à dents de scie, est agencé dans la région de l'étoile à dents de scie (107) en aval de la seconde bande transporteuse (102), dans laquelle une région d'entrée (290) au sein de laquelle les récipients présents peuvent rentrer dans les dents de scie (107) est prévue, et dans laquelle la seconde bande transporteuse (102) s'étend dans la région d'entrée,
**caractérisée en ce qu'**une région de glissement (250) destinée aux récipients se raccorde en aval à la seconde bande transporteuse (102) dans la région de l'arc de guidage (104), dans laquelle un dispositif de blocage (360) destiné aux récipients (130) est agencé en amont de l'étoile à dents de scie (107) afin de bloquer et libérer la région d'entrée (290).

2. Machine de traitement de récipients (100) selon la revendication 1, dans laquelle une direction de transport de la seconde bande transporteuse (102) et une tangente au cercle périphérique extérieur de l'étoile à dents de scie (107) dans la région d'entrée (290) forment un angle compris entre 10° et 40°.

3. Machine de traitement de récipients (100) selon la revendication 1, dans laquelle les différentes vitesses des bandes de transport (101, 102) sont réglables et/ou sont entraînées par un entraînement (M1, M2) réglable, en particulier commandé par fréquence.

4. Procédé de traitement de récipients (130) tels que des bouteilles, dans lequel les récipients sont transportés le long d'une première bande transporteuse (101) à une première vitesse de transport et sont transférés, dans une région de transfert (160) et au moyen d'un guidage (120, 121), à une seconde bande transporteuse (102) s'étendant parallèlement à la première bande transporteuse (101) dans la région de transfert, dans lequel la seconde bande transporteuse présente une seconde vitesse de transport qui est supérieure à la première vitesse de transport, dans lequel l'espacement entre les récipients est induit en aval de la région de transfert grâce à une étoile à dents de scie (107) et les récipients sont transférés depuis l'étoile à dents de scie jusqu'à des stations de traitement de récipients (141) d'une machine de traitement de récipients (100), dans lequel les récipients sont guidés dans la région de l'étoile à dents de scie (107) grâce à un arc de guidage (104) dont le rayon de courbure est au moins égal au rayon maximal de l'étoile à dents de scie, dans lequel une région d'entrée (290) au sein de laquelle les récipients entrent dans l'étoile à dents de scie (107) est prévue, et dans lequel la seconde bande transporteuse (102) s'étend dans la région d'entrée,
**caractérisé en ce qu'**une région de glissement (250) destinée aux récipients se raccorde en aval à la seconde bande transporteuse (102) dans la région de l'arc de guidage (104), dans lequel l'acheminement des récipients jusqu'à l'étoile à dents de scie (107) est bloqué ou libéré grâce à un dispositif de verrouillage (360).

5. Procédé selon la revendication 4, dans lequel la direction de transport des récipients dans une région d'entrée (290) de l'étoile à dents de scie (107) forme avec une tangente au cercle périphérique extérieur de l'étoile à dents de scie dans la région d'entrée un angle compris entre 10° et 40°.

6. Procédé selon l'une quelconque des revendications 4 à 5, dans lequel la vitesse de la seconde bande transporteuse (102) est supérieure de 5 % à 15 % à la vitesse de la première bande transporteuse (101).
